# EUROPÄISCHE PATENTSCHRIFT

(11) **EP 2 430 343 B1**
(45) Veröffentlichungstag und Bekanntmachung des Hinweises auf die Patenterteilung: **01.05.2013**
(21) Anmeldenummer: 10725967.3
(22) Anmeldetag: 10.05.2010
(51) Int. Cl.: F16K 17/30, F16L 55/136, F16K 17/20

(54) **VORRICHTUNG ZUR EINBRINGUNG EINER ABSPERREINRICHTUNG IN EINE ROHRLEITUNG**
DEVICE FOR INSERTING A SHUT-OFF DEVICE IN A PIPELINE
DISPOSITIF D'INTRODUCTION D'UNE INSTALLATION DE RETENUE DANS UNE CONDUITE TUBULAIRE

(30) Priorität: 12.05.2009 DE 102009020875
(43) Veröffentlichungstag der Anmeldung: 21.03.2012
(73) Patentinhaber: Mertik Maxitrol GmbH & Co. KG, 06502 Thale (DE)
(72) Erfinder: HERRFURTH, Werner, 06484 Westerhausen (DE); VOGT, Thomas, 06507 Bad Suderode (DE)
(74) Vertreter: Albrecht, Günter
(86) Internationale Anmeldenummer: PCT/EP2010/002849
(87) Internationale Veröffentlichungsnummer: WO 2010/130387

(56) Entgegenhaltungen:
- DE-A1- 10 324 041
- DE-U1-202005 001 685
- GB-A- 1 299 876

## Beschreibung

### Technisches Gebiet

Die Erfindung betrifft eine Vorrichtung zur Einbringung einer Absperreinrichtung in eine Rohrleitung nach dem Oberbegriff des ersten Patentanspruches.

### Stand der Technik

Absperreinrichtungen zum Verschließen von ein Fluid führende Rohrleitungen gibt es in einer Vielzahl von Ausführungen. Sie können manuell oder automatisch betätigt werden. Für eine automatische Betätigung ist die Einnahme der Schließstellung von der Überschreitung vorgegebener Parameter, wie beispielsweise einer unzulässigen Durchflusserhöhung oder einer unzulässigen Temperaturerhöhung abhängig. Üblicherweise werden die Absperreinrichtungen während des Verlegens der Rohrleitung an den vorgesehenen Stellen zwischen der Rohrleitung eingesetzt.

Als ein Beispiel dafür ist in der WO 92/01184 A1 eine Sicherheitsschließvorrichtung für eine Gasleitung beschrieben. Wie aus der Fig. 1 ersichtlich ist, besteht das Gehäuse aus einem Rohrstück, das an beiden Enden mit einem Gewinde versehen ist. Mit Hilfe dieses Gewindes wird die Sicherheitsschließvorrichtung während des Verlegens der Gasleitung an der vorgesehenen Stelle zwischengeschraubt.

Möglich ist auch die Verwendung eines Verbindungselementes zwischen den Rohrleitungen, in welches die Absperreinrichtung eingesetzt wird. So ist es aus dem Gebrauchsmuster DE 93 19 910 U1 bekannt, die Absperreinrichtung in eine sogenannte Elektroschweißmuffe einzusetzen, wie sie für die Verbindung von aus Kunststoff bestehenden Rohrleitungen benutzt werden.

Bei diesen Lösungen ist es von Nachteil, dass ein nachträglicher Einbau in eine bereits verlegte Rohrleitung nur mit sehr großem Aufwand durch Freilegen und Trennen der Rohrleitung möglich ist. Bei bereits in der Erde verlegten Rohrleitungen ist dieser Aufwand nicht mehr hinnehmbar.

In der DE 103 24 041 B4, der den oberbegriff vom Anspruch 1 offenbart, eine Absperrvorrichtung für gasführende Rohrleitungen, ein sogenannter Gasströmungswächter, beschrieben. Dieser Gasströmungswächter kann in einer Gasleitung an einem für die Sicherheitsfunktion optimalen Stelle platziert und dort lagefixiert werden. Dazu ist der Gasströmungswächter in einem Schubstück befestigt, das seinerseits mit einem Klemmring verschraubbar ist. Der Klemmring weist auf seiner dem Dehnring abgewandten Seite federelastische Elemente auf, die ein Verdrehen des Klemmringes in der Rohrleitung verhindern. Desweiteren ist auf dem Umfang des Schubstückes ein Dehnring angeordnet, der durch die Verschraubung des Schubstückes mit dem Klemmring unter Auftreten einer Durchmesservergrößerung verformt wird.

Neben dem komplizierten Aufbau und den nur aufwändig herzustellenden Einzelteilen weist diese Lösung den Nachteil auf, dass bereits mit Beginn des Einschiebens in die Rohrleitung eine Vorpressung des Dichtelementes erfolgt. Das hat neben dem erhöhten Kraftaufwand während des Fügeweges zum gewünschten Einbauort vor allen Dingen eine starke Verschleißeinwirkung auf das Dichtelement, insbesondere bei trockener Innenwandung, zur Folge. Zusätzlich erzeugen die federelastische Funktionselemente eine Kerbwirkung an der Innenwandung der Rohrleitung über den gesamten Fügeweg, durch die auftretenden Rückdrehkräfte beim Verpressen und als Langzeitwirkung am Einbauort.

### Darstellung der Erfindung

Der Erfindung liegt das Problem zugrunde eine Vorrichtung zur Einbringung einer Absperreinrichtung in eine Rohrleitung zu schaffen, die einen möglichst einfachen Aufbau aufweist und für eine Nachrüstung in bereits verlegte Rohrleitungen geeignet ist. Sie soll in der Rohrleitung an einer für die Funktion optimalen Stelle platziert und dort lagefixiert werden können. Dabei soll der Transport der Vorrichtung bis zum Einbauort mit möglichst geringem Kraftaufwand erfolgen und insbesondere das Dichtelement berührungs- und damit verschleißfrei bewegt werden. Trotzdem ist die innere Abdichtung zwischen der Vorrichtung und dem Innendurchmesser der Rohrleitung zu gewährleisten.

Erfindungsgemäß wird das Problem dadurch gelöst, dass die Vorrichtung zur Einbringung einer Absperreinrichtung in eine Rohrleitung aus einem rohrförmigen Gehäuse besteht, in dessen Innerem eine Absperreinrichtung angeordnet ist, und das so ausgebildet ist, dass sich an den in Einführungsrichtung gesehen vorderen zylindrischen Bereich des Gehäuses, dessen äußerer Durchmesser geringfügig kleiner als der Innendurchmesser der Rohrleitung ist, ein abgesetzter, entgegen der Einführungsrichtung sich konisch verjüngender Bereich anschließt, der durch einen Anschlagbund begrenzt wird, an den sich eine Anschlusskontur für ein Kupplungsstück eines an sich bekannten Antriebselementes anschließt. Auf dem sich konisch verjüngenden Bereich ist ein aus einem dehnfähigen Material bestehendes Gleitstück in axialer Richtung verschiebbar angeordnet, dessen Durchmesser im am Anschlagbund anliegenden Zustand geringfügig kleiner als der innere Durchmesser der Rohrleitung ist, und das eine umlaufende Nut aufweist, in der ein federnder Klemmring gelagert ist.

Damit wurde eine Lösung gefunden, mit der es möglich ist, die oben genannten Probleme zu beseitigen.

Weitere vorteilhafte Ausgestaltungen der Erfindung gehen aus den anderen Patentansprüchen hervor. So kann der Aufbau beispielsweise dadurch vereinfacht werden, indem das Gehäuse einstückig mit der Absperreinrichtung verbunden ist, Dabei kann die Absperreinrichtung beispielsweise aus einem Gasströmungswächter zum automatischen Absperren von Gasleitungen bestehen.

Weiterhin erweist es sich als günstig, wenn sich der Durchmesser des Klemmringes in Einfügerichtung verjüngt, um das Einfügen in die Rohrleitung und die Einführbewegung der Vorrichtung innerhalb der Rohrleitung zu verbessern.

Eine weitere vorteilhafte Ausgestaltung ergibt sich, wenn der konische Bereich in seinen beiden Endbereichen jeweils einen zusätzlichen zylindrischen Bereich aufweist, um in den beiden Endlagen das Auftreten einer axial wirkenden Kraftkomponente zu vermeiden.

Um die Gewährleistung der inneren Abdichtung zwischen der Vorrichtung und dem Innendurchmesser der Rohrleitung noch weiter zu erhöhen, kann das Gleitstück eine zweite Nut aufweisen, in der ein O - Ring gelagert ist.

Bei der Gewährleistung der inneren Abdichtung durch einen O - Ring ergibt sich die Möglichkeit, die Kraft beim Einfügen der Vorrichtung zu verringern, indem die auf dem Gleitstück bestehenden radialen Stege mit einem oder mehreren axialen Schlitzen versehen werden.

### Ausführungsbeispiel

Die Erfindung wird nachstehend an einem Ausführungsbeispiel näher beschrieben. Es zeigen:
- Fig. 1: eine erfindungsgemäße Vorrichtung, teilweise im Schnitt in der Einfügestellung
- Fig. 2: die erfindungsgemäße Vorrichtung aus Fig. 1 in der Endstellung

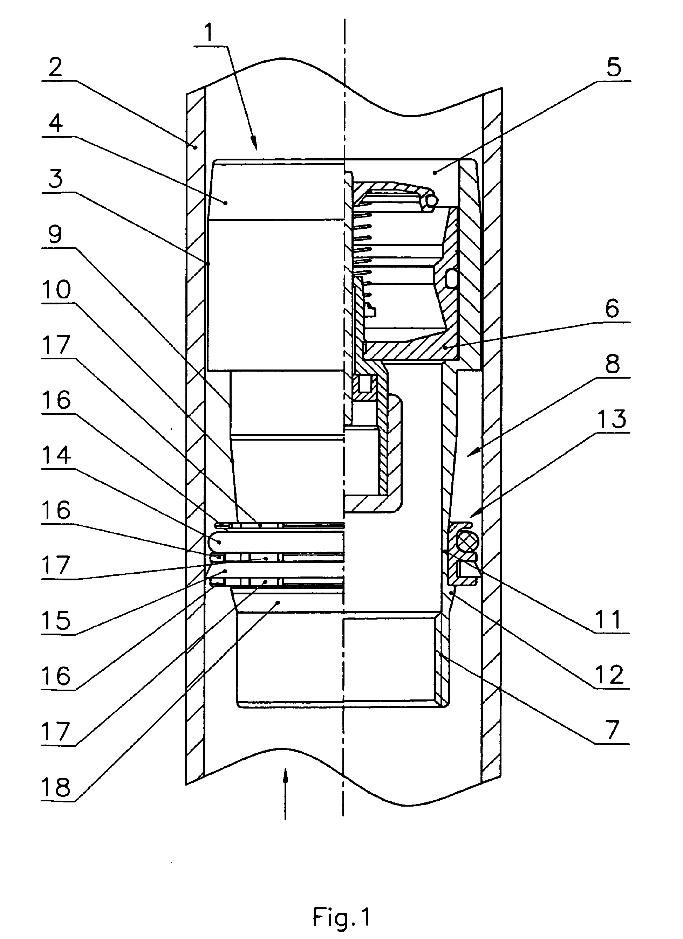

In der Figur 1 ist eine beispielhafte Ausführung einer erfindungsgemäßen Vorrichtung zur Einbringung einer Absperreinrichtung in eine Rohrleitung im bereits eingefügten Zustand in einer Rohrleitung 2 zum Zeitpunkt der Einführbewegung zum Einbauort dargestellt. Die Einfügerichtung ist erklärungshalber durch einen Richtungspfeil in der Darstellung angezeigt. Die Installation kann in flexiblen dehnfähigen Rohren, beispielsweise aus dem Werkstoff Polyethylen, aber auch in starren Rohren, beispielsweise aus dem Werkstoff Stahl, ortsbeliebig erfolgen. Der Transport der Vorrichtung in der Rohrleitung 2 bis hin zum vorgesehenen Einbauort erfolgt mittels eines an sich bekannten Antriebselementes, wie einer nicht dargestellten da dem Fachmann bekannten biegsamen Welle.

Die erfindungsgemäße Vorrichtung besitzt ein rohrförmiges Gehäuse 1, dessen äußerer Durchmesser so festgelegt ist, dass es in die Rohrleitung 2 einführbar ist. Um das Einfügen in die Rohrleitung 2 zu vereinfachen, ist der den größten Durchmesser aufweisende zylindrische Bereich 3 in Einfügerichtung anfangsseitig mit einer Einführungsschräge 4 versehen.

Im Inneren des Gehäuses 1 ist in einer Ausdrehung 5 eine Absperreinrichtung 6, in diesem Fall ein Gasströmungswächter, gasdicht eingedrückt. Aufbau und Wirkungsweise eines Gasströmungswächters sind dem Fachmann bekannt. Auf eine nähere Darstellung und Erläuterung der Einzelheiten wird deshalb in diesem Ausführungsbeispiel verzichtet.

In Einfügerichtung gesehen endseitig besitzt das Gehäuse 1 eine Anschlusskontur, im Ausführungsbeispiel ein Anschlussgewinde 7, zur Verbindung mit einem Kupplungsstück des bereits weiter oben erwähnten Antriebselementes. Es versteht sich, dass in Abhängigkeit vom Kupplungsstück auch eine Bajonettverbindung o.ä. Verwendung finden kann.

Im Anschluss an den zylindrischen Bereich 3 weist die äußere Kontur des Gehäuses 1 einen abgesetzten Bereich 8 auf, der nach einem ersten zylindrischen Teil 9 in einen sich konisch verjüngenden Bereich 10 übergeht, um dann wieder in einem zweiten zylindrischen Teil 11 zu enden.

An einem den abgesetzten Bereich 8 abschließenden Anschlagbund 12 stützt sich im Ausgangszustand ein auf dem zweiten zylindrischen Teil 11 axial beweglich gelagertes Gleitstück 13 ab, das aus einem dehnfähigen Material, beispielsweise Polyethylen, besteht. An seiner dem abgesetzten Bereich 8 abgewandten Seite ist der Anschlagbund 12 mit einer Schräge 18 versehen, um das Gleitstück 13 einfacher auf das Gehäuse 1 montieren zu können.

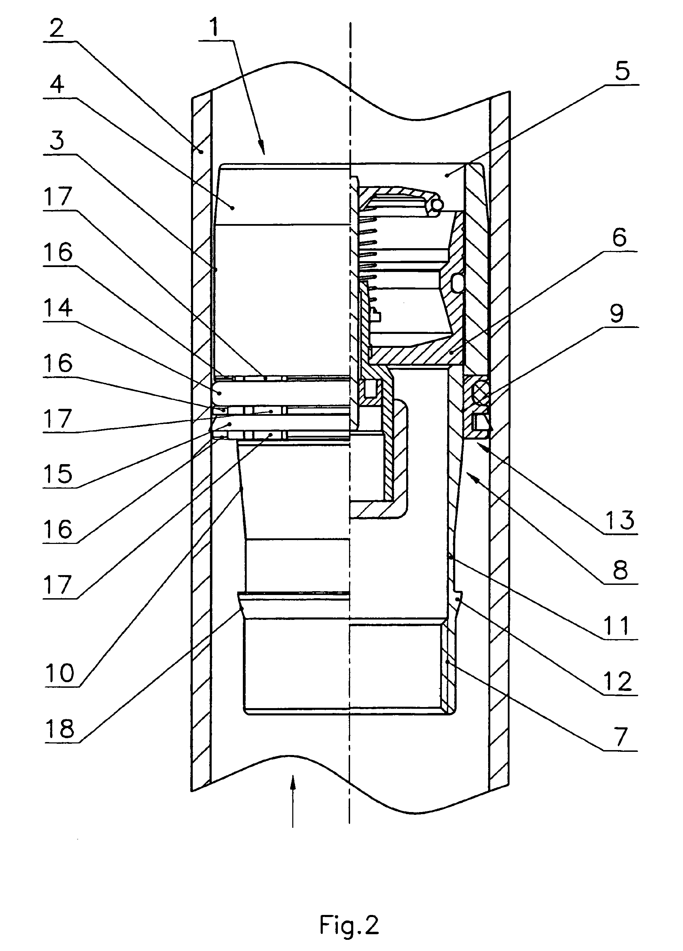

Auf seiner Mantelfläche ist das Gleitstück 13 mit zwei Nuten versehen. Während die eine Nut zur Aufnahme eines zur Gewährleistung der Gasdichtheit dienenden O-Ringes 14 dient, ist in der anderen Nut ein geschlitzter metallischer Klemmring 15 federnd gelagert, dessen Durchmesser im aufgefederten Zustand größer als der Innendurchmesser der Rohrleitung 2 ist und der sich in Einfügerichtung verjüngt. Dabei werden Lage und Parameter von O - Ring 14 und Klemmring 15 dadurch bestimmt, dass beim in Figur 2 dargestellten und weiter unten näher erläuterten eingebautem Zustand durch den Klemmring 15 die Dichtwirkung des O-Ringes 14 nicht negativ beeinflusst wird. Die auf der Mantelfläche des Gleitstückes 13 durch die beiden eingebrachten Nuten gebildeten umlaufenden Stege 16 sind des weiteren mit jeweils vier gleichmäßig auf dem Umfang verteilten Schlitzen 17 versehen.

Der Einbau und die Wirkungsweise der in diesem Ausführungsbeispiel beschriebenen Vorrichtung zur Einbringung einer Absperreinrichtung in eine Rohrleitung ist wie folgt:
Die im Ausführungsbeispiel in Fig. 1 dargestellte Vorrichtung wird wie weiter oben beschrieben, über das Kupplungsstück mit einer nicht dargestellten biegsamen Welle verbunden. Anschließend wird die Vorrichtung mittels der biegsamen Welle in die Rohrleitung 2 eingeführt. Dabei befindet sich das Gleitstück 13 auf dem zweiten zylindrischen Bereich 11. Der Durchmesser des Gleitstückes 13, sowie der äußere Durchmesser des montierten O-Ringes 14 sind kleiner als der innere Durchmesser der Rohrleitung 2, während sich der federnde Klemmring 15 an diesen Durchmesser anpasst und an der Wandung entlang gleitet. Die Einführbewegung wird fortgesetzt, bis der vorgesehene Einbauort erreicht ist.

Nach dem Erreichen des Einbauortes wird zur Lagefixierung der Vorrichtung mittels der biegsamen Welle eine Zugkraft entgegen der Einführungsrichtung ausgeübt. In der Fig. 2 ist die in Fig. 1 gezeigte Vorrichtung zum Zeitpunkt der Lagefixierung am Einbauort in der Rohrleitung 2 dargestellt.

Durch die ausgeübte Zugkraft presst sich der Klemmring 15 in Abhängigkeit vom Werkstoff der Rohrleitung 2 an bzw. in die Wandung derselben, so dass das Gleitstück 13 ortsfest gehalten wird. Der konische Bereich 10 gleitet unter das Gleitstück 13 und führt zu einer Aufweitung desselben bis sich das Gleitstück 13 auf dem ersten zylindrischen Teil 9 befindet. Durch diese Aufweitung wird auch der O-Ring 14 zur erforderlichen Abdichtung an die innere Wandung gepresst. Dabei dienen die auf dem Umfang der Stege 16 verteilten Schlitze 17 dazu den Kraftaufwand bei der Aufweitung zu verringern.

Anschließend wird das Kupplungsstück von der Vorrichtung gelöst, was in diesem Fall durch eine Drehbewegung erfolgt und die biegsame Welle mit dem Kupplungsstück nach außen befördert. Damit ist der Einbau in die Rohrleitung 2 beendet.

### Aufstellung der Bezugszeichen

| | |
|---|---|
| 1 | Gehäuse |
| 2 | Rohrleitung |
| 3 | Zylindrischer Bereich |
| 4 | Einführungsschräge |
| 5 | Ausdrehung |
| 6 | Absperreinrichtung |
| 7 | Anschlussgewinde |
| 8 | Abgesetzter Bereich |
| 9 | Erster zylindrischer Bereich |
| 10 | Konischer Bereich |
| 11 | Zweiter zylindrischer Bereich |
| 12 | Anschlagbund |
| 13 | Gleitstück |
| 14 | O-Ring |
| 15 | Klemmring |
| 16 | Steg |
| 17 | Schlitz |
| 18 | Schräge |

## Patentansprüche

1. Vorrichtung zur Einbringung einer Absperreinrichtung in eine Rohrleitung, wobei die Vorrichtung aus einem rohrförmigen Gehäuse (1) besteht, in dessen Innerem eine Absperreinrichtung (6) angeordnet ist, und dass der äußere Durchmesser des Gehäuses (1) im in Einführungsrichtung gesehen vorderen zylindrischen Bereich (3) geringfügig kleiner als der Innendurchmesser der Rohrleitung (2) ist, **dadurch gekennzeichnet, dass** sich an den vorderen zylindrischen Bereich (3) ein abgesetzter, entgegen der Einführungsrichtung sich konisch verjüngender Bereich (10) anschließt, der durch einen Anschlagbund (12) begrenzt wird, an den sich eine Anschlusskontur (7) für ein Kupplungsstück eines an sich bekannten Antriebselementes anschließt, wobei auf dem sich konisch verjüngenden Bereich (10) ein aus einem dehnfähigen Material bestehendes Gleitstück (13) in axialer Richtung verschiebbar angeordnet ist, dessen äußerer Durchmesser im am Anschlagbund (12) anliegendem Zustand geringfügig kleiner als der innere Durchmesser der Rohrleitung (2) ist, und das eine umlaufende Nut aufweist, in der ein federnder Klemmring (15) gelagert ist.

2. Vorrichtung zur Einbringung einer Absperreinrichtung in eine Rohrleitung nach Patentanspruch 1, **dadurch gekennzeichnet, dass** das Gehäuse (1) einstückig mit der Absperreinrichtung (6) verbunden ist.

3. Vorrichtung zur Einbringung einer Absperreinrichtung in eine Rohrleitung nach Patentanspruch 1 oder 2, **dadurch gekennzeichnet, dass** die Absperreinrichtung (6) aus einem Gasströmungswächter zum automatischen Absperren von Gasleitungen besteht.

4. Vorrichtung zur Einbringung einer Absperreinrichtung in eine Rohrleitung nach Patentanspruch 1, **dadurch gekennzeichnet, dass** sich der Durchmesser des Klemmringes (15) in Einfügerichtung verjüngt.

5. Vorrichtung zur Einbringung einer Absperreinrichtung in eine Rohrleitung nach Patentanspruch 1, **dadurch gekennzeichnet, dass** der konische Bereich (10) in seinen beiden Endbereichen einen zusätzlichen zylindrischen Bereich (9; 11) aufweist.

6. Vorrichtung zur Einbringung einer Absperreinrichtung in eine Rohrleitung nach Patentanspruch 1, **dadurch gekennzeichnet, dass** der Klemmring (15) eine zweite Nut aufweist, in der ein O - Ring (14) gelagert ist.

7. Vorrichtung zur Einbringung einer Absperreinrichtung in eine Rohrleitung nach Patentanspruch 6, **dadurch gekennzeichnet, dass** die auf dem Gleitstück (13) bestehenden radialen Stege (16) ein- oder mehrere axiale Schlitze (17) aufweisen.

## Claims

1. Device for inserting a shut-off device in a pipeline, at which the device comprises a tubular housing (1) in whose interior a shut-off device (6) is disposed, and that the external diameter of the housing (1) in the front cylindrical region (3) looked at from the direction of insertion is slightly smaller than the internal diameter of the pipeline (2), **characterized in that** an offset region (10) conically tapering towards the direction of insertion is adjacent to the front cylindrical region (3), with said offset region bounded by a stop collar (12) on which a connecting contour (7) for a coupling piece of a drive element known per se is connected, wherein a sliding piece (13) made of an expandable material, whose external diameter when lying against the stop collar (12) is slightly smaller than the internal diameter of the pipeline (2), and which comprises a circumferential groove in which a spring-loaded clamping ring (15) is supported, is displaceably disposed in the axial direction on the conically tapering region (10).

2. Device for inserting a shut-off device in a pipeline in accordance with claim 1, **characterized in that** the housing (1) is connected to the shut-off device (6) in one piece.

3. Device for inserting a shut-off device in a pipeline in accordance with claim 1 or 2, **characterized in that** the shut-off device (6) comprises a gas flow monitor for the automatic shutting-off of gas lines.

4. Device for inserting a shut-off device in a pipeline in accordance with claim 1, **characterized in that** the diameter of the clamping ring (15) tapers in the direction of insertion.

5. Device for inserting a shut-off device in a pipeline in accordance with claim 1, **characterized in that** the conical region (10) has an additional cylindrical region (9; 11) at its two end regions.

6. Device for inserting a shut-off device in a pipeline in accordance with claim 1, **characterized in that** the clamping ring (15) has a second groove in which an O-ring (14) is supported.

7. Device for inserting a shut-off device in a pipeline in accordance with claim 6, **characterized in that** the radial bars (16) on the sliding piece (13) have one or more axial slots (17).

## Revendications

1. Dispositif d'introduction d'une installation de retenue dans une conduite tubulaire, le dispositif étant constitué d'un boîtier (1) tubulaire à l'intérieur duquel est disposée une installation de retenue (6), et le diamètre extérieur du boîtier (1) dans la zone cylindrique avant (3) - vu dans le sens de l'introduction - étant légèrement inférieur au diamètre intérieur de la conduite tubulaire (2), **caractérisé en ce qu**'une zone décalée se rétrécissant de façon conique (10) contre le sens de l'introduction fait suite à la zone cylindrique avant (3), la zone se rétrécissant de façon conique (10) étant délimitée par une collerette de butée (12) à laquelle se raccorde un contour de raccordement (7) pour une pièce d'accouplement d'un élément d'entraînement connu en tant que tel, une pièce coulissante (13) constituée d'un matériau extensible étant disposée à coulissement sur la zone se rétrécissant de façon conique (10), dans le sens axial, le diamètre extérieur de la pièce coulissante (13) étant légèrement inférieur au diamètre intérieur de la conduite tubulaire (2), dans l'état en appui contre la collerette de butée (12), et la pièce coulissante (13) comprenant une rainure périphérique dans laquelle est logé un anneau de serrage (15) élastique.

2. Dispositif d'introduction d'une installation de retenue dans une conduite tubulaire selon la revendication 1, **caractérisé en ce que** le boîtier (1) est solidaire avec l'installation de serrage (6).

3. Dispositif d'introduction d'une installation de retenue dans une conduite tubulaire selon la revendication 1 ou 2, **caractérisé en ce que** l'installation de serrage (6) est constituée d'un dispositif de surveillance de l'écoulement de gaz pour la fermeture automatique de conduites de gaz.

4. Dispositif d'introduction d'une installation de retenue dans une conduite tubulaire selon la revendication 1, **caractérisé en ce que** le diamètre de l'anneau de serrage (15) se rétrécit dans le sens de l'insertion.

5. Dispositif de l'introduction d'une installation de retenue dans une conduite tubulaire selon la revendication 1, **caractérisé en ce que** la zone conique (10) comprend une zone cylindrique (9; 11) additionnelle dans ses deux zones d'extrémité.

6. Dispositif de l'introduction d'une installation de retenue dans une conduite tubulaire selon la revendication 1, **caractérisé en ce que** l'anneau de serrage (15) comprend une deuxième rainure dans laquelle est logé un joint torique (14).

7. Dispositif de l'introduction d'une installation de retenue dans une conduite tubulaire selon la revendication 6, **caractérisé en ce que** les nervures radiales (16) se trouvant sur la pièce coulissante (13) comprennent une ou plusieurs fentes axiales (17).
